# EUROPEAN PATENT SPECIFICATION

(11) **EP 4 579 326 B1**
(45) Date of publication and mention of the grant of the patent: **14.10.2026**
(21) Application number: 24222704.9
(22) Date of filing: 23.12.2024
(51) Int. Cl.: G02F 1/1333, G02F 1/1335, G02F 1/1339, G02B 30/26, G02B 30/30, H04N 13/31

(54) **DISPLAY DEVICE**
ANZEIGEVORRICHTUNG
DISPOSITIF D'AFFICHAGE

(30) Priority: 27.12.2023 JP 2023221235
(43) Date of publication of application: 02.07.2025
(73) Proprietor: Japan Display Inc., Tokyo 140-0002 (JP)
(72) Inventor: ISAMI, Hironobu, Tokyo 105-0003 (JP); TANAKA, Shinichiro, Tokyo 105-0003 (JP); OUMI, Takuma, Tokyo 105-0003 (JP)
(74) Representative: MERH-IP Matias Erny Reichl Hoffmann Patentanwälte PartG mbB

(56) References cited:
- JP-A- 2007 240 811
- US-A1- 2015 049 266

## Description

### FIELD

Embodiments described herein relate generally to a display device.

### BACKGROUND

In recent years, display devices that display two different images (videos) on a single screen have been put into practical use. When such a display device is applied to a car navigation system, for example, it can provide two different images to a plurality of users, such as displaying a map image to the driver of the vehicle and a television image to the passengers.

In such a display device, in order to display two different images on a single screen, a parallax barrier pattern is provided between a transparent substrate made of glass or resin and a thick transparent layer made of an organic layer. Here, since organic layers generally have low resistance to moisture, if moisture enters the thick transparent layer from an edge of the thick transparent layer, there is a possibility that the parallax barrier pattern may peel off from the transparent substrate due to the moisture that has entered. In this case, display non-uniformity may occur, making it not possible to provide two different images to a plurality of users.
US 2015/049266 A1 discloses an autostereoscopic display system including a display with a plurality of addressable pixels. Each of the plurality of pixels includes two or more sub-pixels. The display is adapted to have n views in the horizontal direction wherein n is an integer greater than or equal to 2. A native pixel density of the display in the horizontal direction divided by n is greater than 75% of a native pixel density in the vertical direction. The system further includes a view selector that, for each of two or more viewing perspectives, makes one of the views visible and a multiplexer system in operative connection with the display. The multiplexer system is adapted to controllably shift light horizontally from at least one of the plurality of pixels.
JP 2007 240811 A discloses a structure comprising two substrates of different sizes with an electro-optical material between them, and a moisture-impervious protective member. The protective member is adhesively fitted into a stepped portion formed between the side surface of the smaller, second substrate and the surface of the larger, first substrate in a region of the first substrate that does not overlap the second substrate, thereby bonding and sealing both substrates.

### BRIEF DESCRIPTION OF THE DRAWINGS

FIG. 1 is a plan view schematically showing a configuration example of a liquid crystal display device which can realize two-screen display.
FIG. 2 is a cross-sectional view schematically showing the liquid crystal display panel taken along the line A-B in FIG. 1.
FIG. 3 is a plan view schematically showing a configuration example of the liquid crystal display device which can realize two-screen display.
FIG. 4 is a plan view schematically showing a configuration example of a liquid crystal display device according to an embodiment.
FIG. 5 is a cross-sectional view schematically showing the liquid crystal display panel taken along the line C1-D1 in FIG. 4.
FIG. 6 is a plan view schematically showing another configuration example of the liquid crystal display device according to the embodiment.
FIG. 7 is a plan view schematically showing a configuration example of a liquid crystal display device according to the first modified example.
FIG. 8 is a cross-sectional view schematically showing the liquid crystal display panel taken along the line E-F in FIG. 7.
FIG. 9 is a plan view schematically showing a configuration example of a liquid crystal display device according to the second modified example.
FIG. 10 is a cross-sectional view schematically showing the liquid crystal display panel taken along the line G-H in FIG. 9.
FIG. 11 is a plan view schematically showing a configuration example of a liquid crystal display device according to the third modified example.
FIG. 12 is a cross-sectional view schematically showing the liquid crystal display panel taken along the line I-J in FIG. 11.

### DETAILED DESCRIPTION

The aforementioned problem is solved by the invention according to the independent claim 1. Further preferred developments are described by the dependent claims.

Embodiments will be described hereinafter with reference to the accompanying drawings.

In some cases, in order to make the description clearer, the widths, thicknesses, shapes, etc., of the respective parts are schematically illustrated in the drawings, compared to the actual modes. However, the schematic illustration is merely an example, and adds no restrictions to the interpretation of the invention. Besides, in the specification and drawings, the same or similar elements as or to those described in connection with preceding drawings or those exhibiting similar functions are denoted by like reference numerals, and a detailed description thereof is omitted unless otherwise necessary.

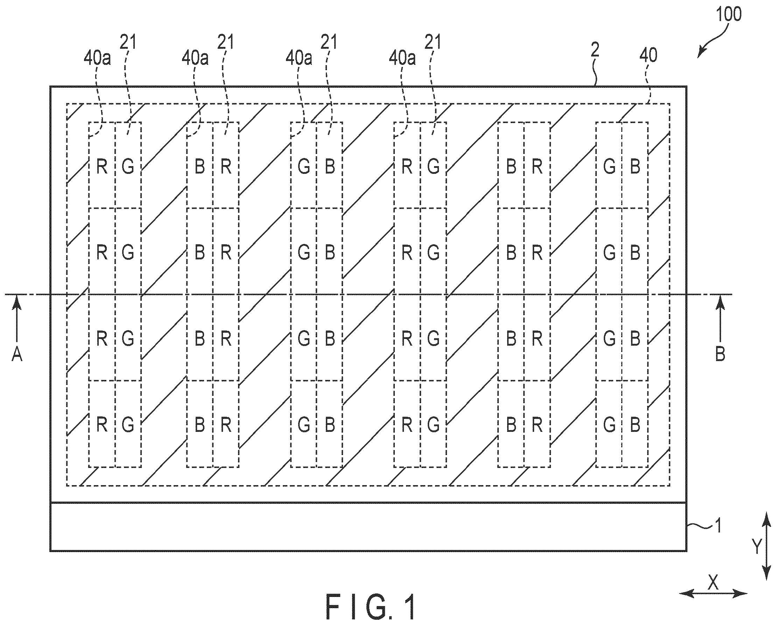

First, with reference to FIGS. 1 to 3, a configuration example of a liquid crystal display device 100 that can achieve two-screen display in which two different images (videos) are that displayed on a single screen will be described. This embodiment will be described in connection with the case where the liquid crystal display device 100 is a liquid crystal display device of a system referred to as the fringe field switching (FFS) mode. Further, the liquid crystal display device 100 is also an example of a "display device" that can achieve two-screen display.

In the liquid crystal display device 100, as shown in FIGS. 1 to 3, a first substrate SUB1 (array substrate) including a first transparent substrate 1 and a second substrate SUB2 (counter-substrate) including a second transparent substrate 2 are disposed to oppose each other. The liquid crystal display device 100 achieves two-screen display by displaying two different images (videos) while separating the images (videos) by a parallax barrier pattern 40 described below.

On a surface of a Z1 direction side of the first transparent substrate 1, thin-film transistors (TFT) 3 for selecting pixels, pixel electrodes 4, and a common electrode 5 are formed.

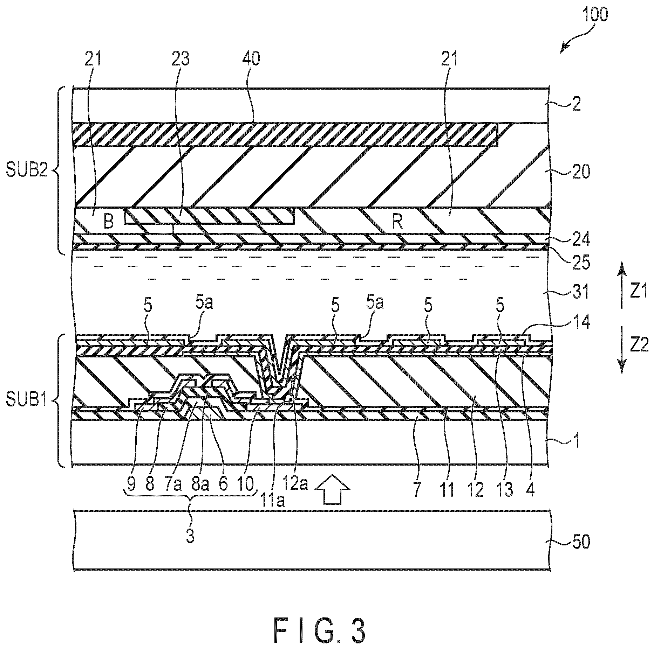

Further, as a detailed cross-sectional structure of a single pixel, a gate electrode 6 is provided on the Z1-direction side surface of the first transparent substrate 1 as shown in FIG. 3. Further, on the gate electrode 6 and the first substrate SUB1, an insulating film 7 including a gate insulating film 7a formed from an SiN film, an SiO₂ film or the like, is formed. Furthermore, a semiconductor layer 8 having a two-layer structure (not shown) constituted by an a-Si layer as a lower layer and an n⁺a-Si layer having has n-type conductivity as an upper layer, is formed so as to overlap the gate electrode 6 via the gate insulating film 7a in plan view.

On the semiconductor layer 8, a source electrode 9 and a drain electrode 10 are formed so as to overlap the gate electrode 6 in plan view. The area of the semiconductor layer 8, which is sandwiched between the source electrode 9 and the drain electrode 10 in plan view, functions as a channel region 8a. Each thin film transistor (TFT) 3 for pixel selection is constituted by a gate electrode 6, a gate insulating film 7a, a semiconductor layer 8, a source electrode 9, and a drain electrode 10.

Further, an interlayer insulating film 11, which is made from an SiN film and the like, is formed so as to cover the source electrode 9, the drain electrode 10, and the insulating film 7. In the interlayer insulating film 11, a contact hole 11a is formed in the area corresponding to the drain electrode 10. On the surface of the interlayer insulating film 11, a planarization film 12 formed from an organic film made of acrylic resin or the like, is formed. Further, a contact hole 12a is formed in the planarization film 12. Furthermore, the pixel electrode 4 is formed on the surface of the flattening film 12, from a transparent electrode of such as indium tin oxide (ITO) or indium zinc oxide (IZO) so as to be connected to the drain electrode 10 via a contact hole 11a and a contact hole 12a.

Further, on the surface of the planarization film 12 and the pixel electrode 4, a passivation film 13, which is formed from an SiO₂, SiN film or the like, is formed. Furthermore, the common electrode 5 is formed on the surface of the passivation film 13, from a transparent electrode such as of ITO or IZO. The common electrode 5 has a plurality of apertures 5a, and is configured so that an electric field is generated between the pixel electrode 4 and the common electrode 5 via the apertures 5a. As described above, the liquid crystal display device 100 of the FFS mode is configured, in which the liquid crystals are driven by the lateral electric field between the pixel electrode 4 and the common electrode 5.

Moreover, on the common electrode 5, an alignment film 14 made from an organic film such as of polyimide is formed. The alignment film 14 is formed so as to cover the surface of the common electrode 5, and is also formed so as to be in contact with the passivation film 13 via the aperture 5a of the common electrode 5. With this configuration, the first transparent substrate 1, the thin-film transistor 3, the interlayer insulating film 11, the planarization film 12, the pixel electrode 4, the passivation film 13, the common electrode 5, and the alignment film 14 constitute the first substrate SUB1.

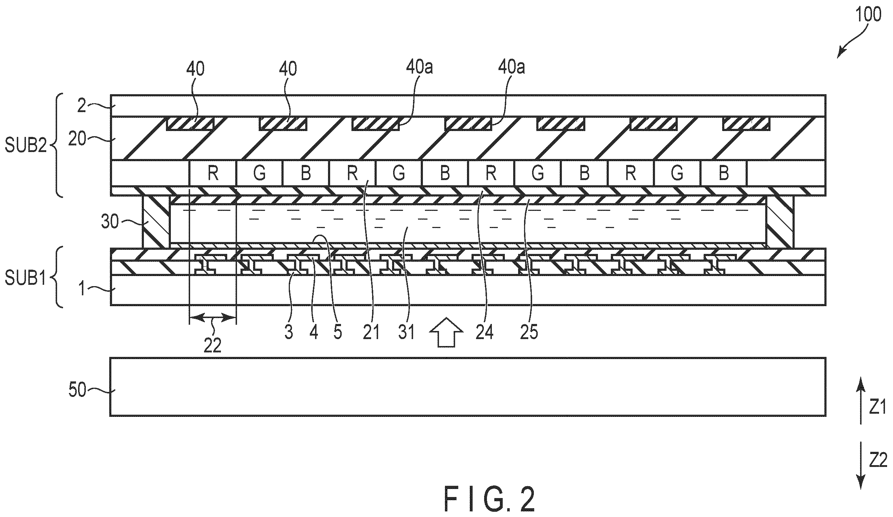

As shown in FIGS. 2 and 3, on the surface of a Z2 direction side of the second transparent substrate 2, a thick transparent layer 20 formed from an organic layer, is formed. Further, as shown in FIGS. 2 and 3, a parallax barrier pattern 40 is formed on the Z2 direction-side surface of the second transparent substrate 2. On the Z2 direction-side surface of the thick transparent layer 20, red (R), green (G), and blue (B) color filters 21 are formed. Note here that the liquid crystal display device 100 includes a plurality of pixels 22 formed therein, and each of the pixels 22 is provided with a respective color filter 21.

Further, as shown in FIG. 3, a black matrix 23 made of a resin or the like is formed on the Z2 direction-side surface of the thick transparent layer 20. The black matrix 23 is formed on a boundary between each adjacent pair of pixels 22 in plan view, and is formed into a matrix pattern. Further, an overcoat layer 24 is formed as a protective film on Z2 direction-side surfaces of the black matrix 23 and the color filter 21. Furthermore, an alignment film 25 made from an organic film such as of polyimide is formed on a Z2 direction-side surface of the overcoat layer 24. Thus, the second transparent substrate 2, the thick transparent layer 20, the parallax barrier pattern 40, the color filter 21, the black matrix 23, the overcoat layer 24, and the alignment film 25 constitute the second substrate SUB2.

The first substrate SUB1 and the second substrate SUB2 are adhered together by a sealing material 30 (see FIG. 2), and a liquid crystal layer 31 is sealed between the alignment film 14 on a first substrate SUB1 side and the alignment film 25 on a second substrate SUB2 side. On the Z2 direction side of the first substrate SUB1, a backlight 50 is provided, and is configured to emit light from the backlight 50 toward the second substrate SUB2 (the Z1 direction side) from the first substrate SUB1.

The parallax barrier pattern 40 described above is formed, for example, from a resin layer or a metal layer such as of chromium (Cr), aluminum (Al), silver (Ag), or nickel (Ni), and has light-shielding properties. Further as shown in FIG. 1, the parallax barrier pattern 40 has a plurality of substantially rectangular apertures (slits) 40a formed to extend along a Y direction. The parallax barrier pattern 40 between each adjacent pair of apertures 40a is formed so as to block light. Furthermore, the parallax barrier pattern 40 is configured so that two of the three colors (red (R), green (G), and blue (B)) of the color filters 21 are visible through the apertures 40a of the parallax barrier pattern 40.

Here, incidentally, since the thick transparent layer 20 is made of an organic layer, it has low resistance to moisture, and if moisture enters the thick transparent layer 20 from an end portion of the thick transparent layer 20, there is a possibility that the parallax barrier pattern 40 may peel off from the second transparent substrate 2 due to the moisture that has entered. If the parallax barrier pattern 40 peels off from the second transparent substrate 2, it is no longer possible to properly direct the light from the backlight 50, thereby problematically making it not possible to achieve two-screen display.

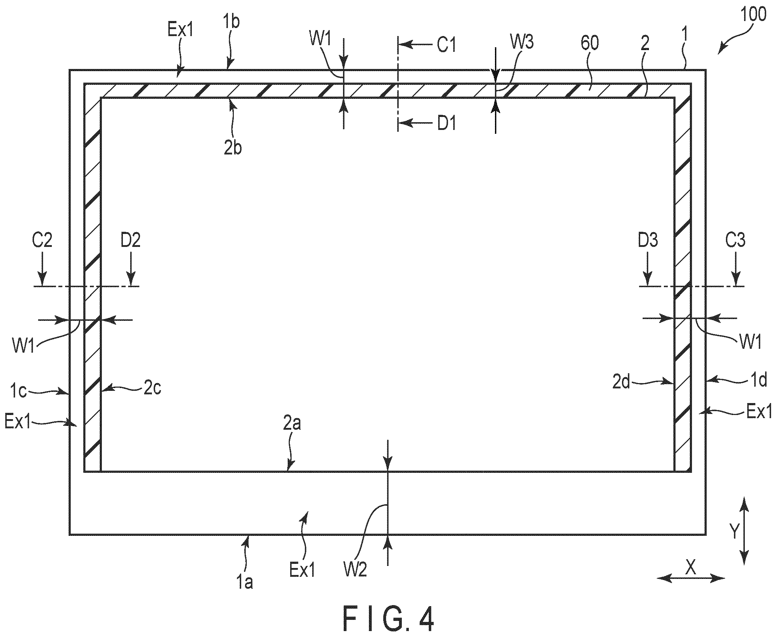

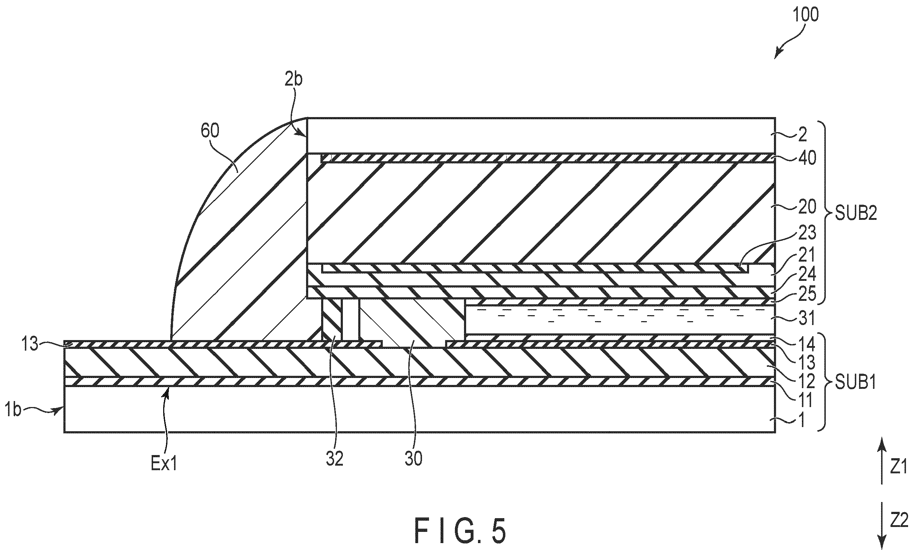

To avoid this, in the liquid crystal display device 100 of this embodiment, the end portion of the thick transparent layer 20 is covered by a sealing material 60m which will be described later, thereby preventing moisture from entering the thick transparent layer 20. A configuration example of the liquid crystal display device 100 according to this embodiment will now be described with reference to FIGS. 4 and 5.

FIG. 4 is a plan view schematically showing a configuration example of the liquid crystal display device 100 of this embodiment. Note that FIG. 4 illustrates only the first transparent substrate 1, the second transparent substrate 2, and the sealing material 60 among the elements that make up the liquid crystal display device 100.

The first transparent substrate 1 includes side surfaces 1a and 1b along an X direction and side surfaces 1c and 1d along the Y direction. The second transparent substrate 2 includes side surfaces 2a and 2b along the X direction and side surfaces 2c and 2d along the Y direction.

In plan view, the side surface 1a of the first transparent substrate 1 and the side surface 2a of the second transparent substrate 2 do not overlap each other. Similarly, in plan view, the side surfaces 1b and 2b, the side surfaces 1c and 2c, and the side surfaces 1d and 2d do not overlap each other, respectively. The first transparent substrate 1 includes extending portions Ex1 (first extending portions) each between the side surfaces 1a and 2a, between the side surfaces 1b and 2b, between the sides surface 1c and 2c, and between the side surfaces 1d and 2d. In the example shown in FIG. 4, the extending portion Ex1 provided between the side surfaces 1a and 2a has a width W2, which is greater than a width W1 of the extending portions Ex1 each provided between the side surfaces 1b and 2b, the side surfaces 1c and 2c, and the side surfaces 1d and 2d. This configuration is formed because the extending portion Ex1 between the side surfaces 1a and 2a functions as a mounting section, and terminal portions (a pad group) are formed on the extending portion EX1, and the wiring substrates and IC chips that constitute the liquid crystal display device 100 are mounted thereon.

On the extending portions Ex1 of the first transparent substrate 1, the sealing material 60 is provided so as to cover the end portions of the second transparent substrate 2 except for the end portions of the mounting side described above (that is, the side surfaces 2b to 2d other than the side surface 2a) (the end portion of the thick transparent layer 20, a more detail thereof will be described later). In other words, the sealing material 60 is provided to cover the end portion (the end portion of the thick film transparent layer 20) of the second transparent substrate 2 on the extending portions EX1 other than the extending portion EX1 that functions as the mounting portion. The width W3 of the sealing material 60 should preferably be set to 0.5 mm to 1.5 mm, for example.

FIG. 5 is a cross-sectional view schematically showing the liquid crystal display device 100 taken along the line C1-D1 in FIG. 4.

As shown in FIG. 5, on a Z1 direction side of the first transparent substrate 1, the interlayer insulating film 11, the planarization film 12, the passivation film 13, and the alignment film 14 are stacked in this order to constitute the first substrate SUB1. Note that in FIG. 5, the elements that make up the thin film transistor 3 for selecting pixels shown in FIG. 3, the pixel electrodes 4, and the common electrode 5 are omitted from the illustration, but these elements are disposed between the first transparent substrate 1 and the alignment film 14 as shown in FIG. 3.

As shown in FIG. 5, on a Z2 direction side of the second transparent substrate 2, the thick transparent layer 20, the color filters 21, the overcoat layer 24, and the alignment film 25 are stacked in the order to constituted the second substrate SUB2. The parallax barrier pattern 40 is formed between the second transparent substrate 2 and the thick transparent layer 20, and the black matrix 23 is formed between the thick transparent layer 20 and the color filters 21.

The first substrate SUB1 and the second substrate SUB2 are adhered together by the sealing material 30, and the liquid crystal layer 31 is sealed between the alignment film 14 on the first substrate SUB1 side and the alignment film 25 on the second substrate SUB2 side. On an outer side of the sealing material 30 and between the first substrate SUB1 and the second substrate SUB2, a spacer 32 for forming a cell gap is disposed.

As shown in FIG. 5, the first transparent substrate 1 includes the extending portion Ex1 between the side surface 1b and the side surface 2b of the second transparent substrate 2. On the extending portion EX1, the sealing material 60 is provided so as to cover the end portion (the side surface 2b) of the second transparent substrate 2, the end portion of the thick transparent layer 20, the end portion of the color filter 21, and the end portion of the overcoat layer 23 (that is, the end portion of the second substrate SUB2). The sealing material 60 is formed, for example, from acrylic resin, epoxy resin, or a combination of these. Note here that the sealing material 60 should preferably be formed of a material having a moisture resistance higher than that of the thick transparent layer 20.

In this configuration, the sealing material 60 is provided, for example, in a processing step after the adhesion of the first substrate SUB1 and the second substrate SUB2 together by the sealing material 30, and in a processing step of forming a protective film (not shown) for protecting the IC chips and the like (not shown), so as to cover the end portion of the second substrate SUB2, which includes the end portion of the thick transparent layer 20.

Note that in FIG. 5, the cross-section of the liquid crystal display device 100 taken along the line C1-D1 in FIG. 4 is shown, but the cross-sections of the liquid crystal display device 100 along the line C2-D2 and line C3-D3 line in FIG. 4 have a similar structure.

As described above, in the liquid crystal display device 100 according to this embodiment, an end potion of the thick film transparent layer 20 are covered by the sealing material 60 provided on the extending portion Ex1. With this configuration, it is possible to suppress moisture from entering the thick transparent layer 20 from the end portion of the thick transparent layer 20, and prevent the parallax barrier pattern 40 from peeling off from the second transparent substrate 2.

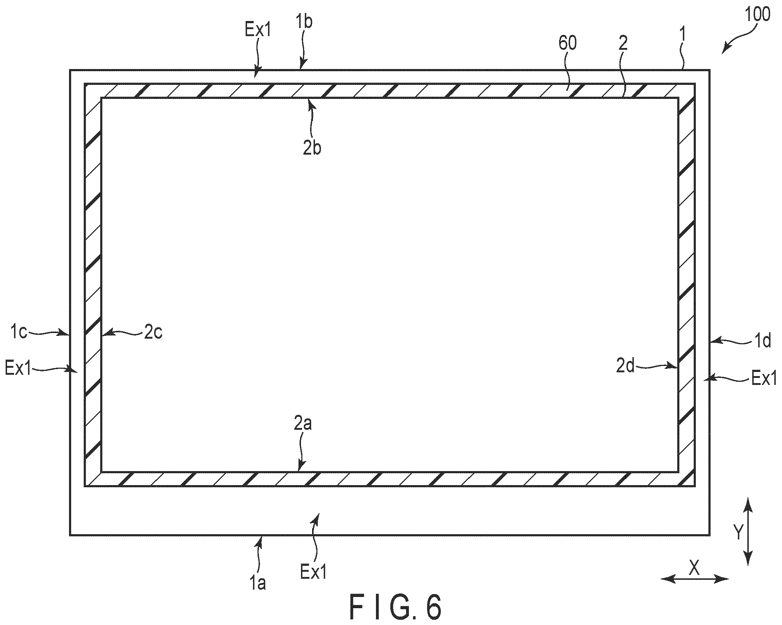

Note that in this embodiment, such a case is described that the sealing material 60 is provided so to cover an end portion of the thick transparent layer 20 other than the end portion on the mounting portion side described above, but the configuration is not limited to this. In an example not according to the invention, the sealing material 60 may as well be provided in a rectangular frame shape, as shown in FIG. 6, so as to cover the entire circumference of the end portions of the second transparent substrate 2, including the entire circumference of the end portions of the thick film transparent layer 20 (that is, the side surfaces 2a to 2d).

Modified examples will now be described.

### (First Modified Example)

The first modified example is different from the configuration shown in FIGS. 4 and 5 in that a cover member 28, which will be described later, is additionally provided on the second transparent substrate 2. In the following descriptions, the parts that are different from those of the configuration shown in FIGS. 4 and 5 will be explained, and the parts that are similar to those of the configuration shown in FIGS. 4 and 5 will be omitted.

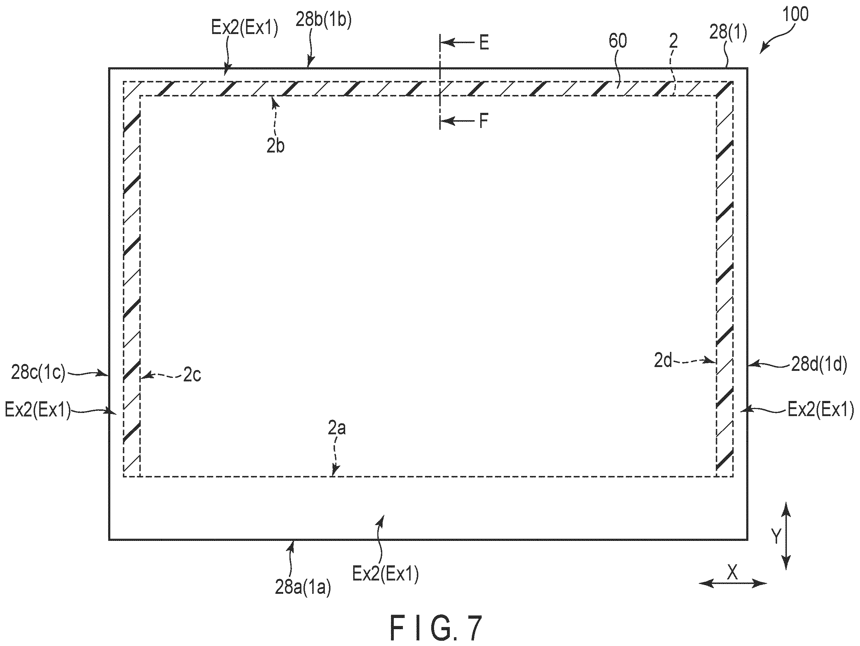

FIG. 7 is a plan view schematically showing a configuration example of the liquid crystal display device 100 according to the first modified example. Note that in FIG. 7, among the elements that make up the liquid crystal display device 100, only the first transparent substrate 1, the second transparent substrate 2, the sealing material 60, and the cover member 28 are illustrated.

The cover member 28 includes side surfaces 28a and 28b along the X direction and side surfaces 28c and 28d along the Y direction.

In plan view, the side surface 28a of the cover member 28 overlaps the side surface 1a of the first transparent substrate 1. Similarly, in plan view, the side surfaces 28b, 28c, and 28d of the cover member 28 overlap the side surfaces 1b, 1c, and 1d of the first transparent substrate 1, respectively.

Further, in plan view, the side surface 28a of the cover member 28 does not overlap the side surface 2a of the second transparent substrate 2. Similarly, in plan view, the side surfaces 28b, 28c, and 28d of the cover member 28 do not overlap the side surfaces 2b, 2c, and 2d of the second transparent substrate 2, respectively. The cover member 28 includes extending portions Ex2 (second extending portions) each between the side surfaces 28a and 2a, between the side surfaces 28b and 2b, between the side surfaces 28c and 2c, and between the side surfaces 28d and 2d.

Between the extending portion EX1 of the first transparent substrate 1 and the extending portion EX2 of the cover member 28, the sealing material 60 is provided so as to cover the end portion of the second transparent substrate 2, which is other than the end portions on the mounting side edge (the end portion of the thick transparent layer 20, a more detail of which will be described later).

Note that FIG. 7 illustrates the case where the side surfaces 28a to 28d of the cover member 28 and the side surfaces 1a to 1d of the first transparent substrate 1 overlap respectively each other in plan view, but the configuration is not limited to this. For example, the side surfaces 28a to 28d of the cover member 28 and the side surfaces 1a to 1d of the first transparent substrate 1 do not necessarily have to overlap in plan view.

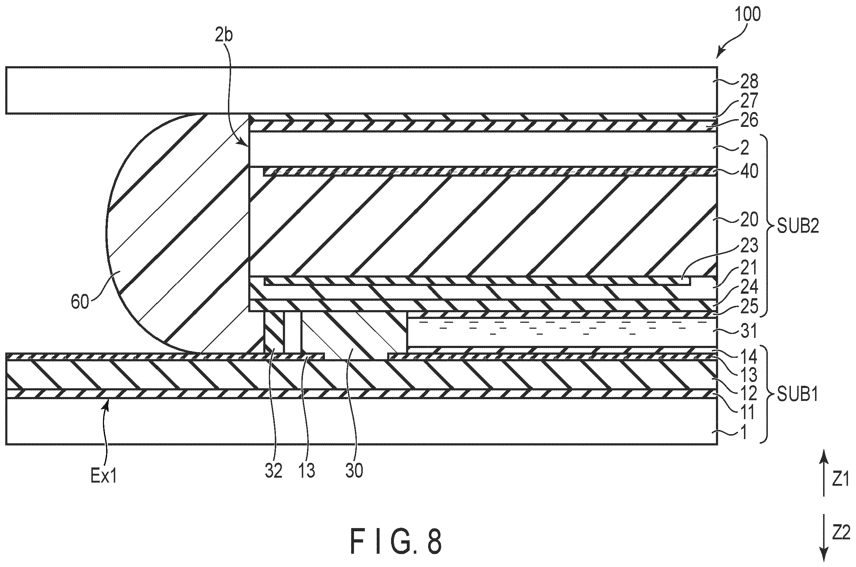

FIG. 8 is a cross-sectional view schematically showing the liquid crystal display device 100 taken along the line E-F in FIG. 7.

As shown in FIG. 8, a polarizer 26 is disposed on a Z1 direction-side surface of the second transparent substrate 2. Further, the cover member 28 is disposed on the Z1 direction side of the polarizer 26 via an adhesive layer 27. The cover member 28 can be made of a glass substrate or a resin substrate, for example.

As described above, between the extending portions Ex1 of the first transparent substrate 1 and the extending portion Ex2 of the cover member 28, the sealing material 60 is provided to cover the end portion of the polarizer 26, the end portion of the second transparent substrate 2, the end portion of the thick film transparent layer 20, the end portion of the color filter 21, and the end portion of the overcoat layer 23 (that is, the end portions of the second substrate SUB2).

In the liquid crystal display device 100 of the first modified example described above, the configuration of the end portion of the thick film transparent layer 20 still remains unchanged, and is covered by the sealing material 60 provided between the extending portions Ex1 and Ex2. Therefore, as in the case of the configuration shown in FIGS. 4 and 5, it is possible to suppress moisture from entering the thick transparent layer 20 from the end portion of the thick transparent layer 20, and to prevent the parallax barrier pattern 40 from peeling off from the second transparent substrate 2.

### (Second Modified Example)

The second modified example is different from the configuration shown in FIGS. 4 and 5 in that a cover member 28 is further provided on the second transparent substrate 2 and the first transparent substrate 1 does not have an extending portion Ex1 other than the mounting portion. In the following descriptions, the parts that are different from those of the configuration shown in FIGS. 4 and 5 will be explained, and the parts that are similar to those of the configuration shown in FIGS. 4 and 5 will be omitted.

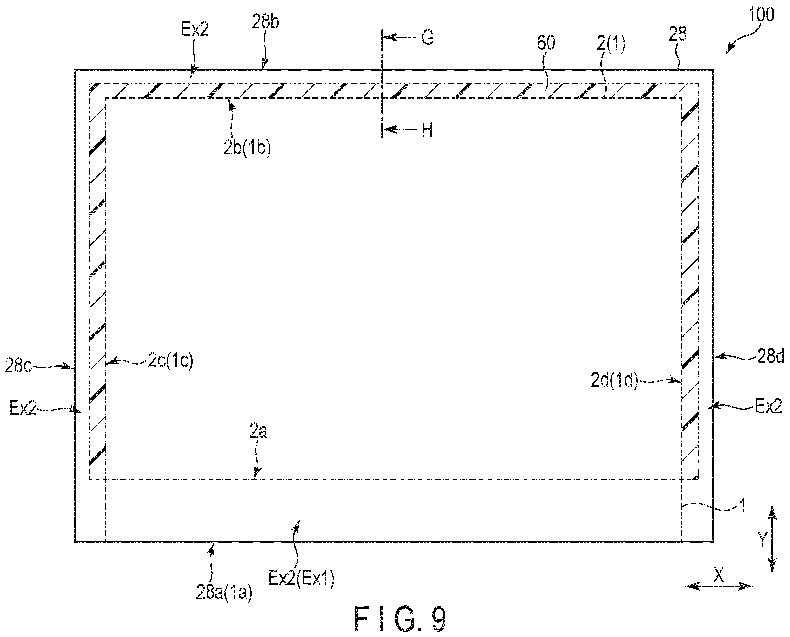

FIG. 9 is a plan view schematically showing a configuration example of the liquid crystal display device 100 according to the second modified example. Note that in FIG. 9, among the elements that make up the liquid crystal display device 100, only the first transparent substrate 1, the second transparent substrate 2, the sealing material 60, and the cover member 28 are illustrated.

The cover member 28 includes side surfaces 28a and 28b along the X direction and side surfaces 28c and 28d along the Y direction.

In plan view, the side surfaces 1b, 1c, and 1d of the first transparent substrate 1 overlap the side surfaces 2b, 2c, and 2d of the second transparent substrate 2, respectively. On the other hand, in plan view, the side surface 1a of the first transparent substrate 1 does not overlap the side surface 2a of the second transparent substrate 2. The first transparent substrate 1 includes an extending portion Ex1 that functions as a mounting portion between the side surfaces 1a and 2a.

In plan view, the side surfaces 28b, 28c, and 28d of the cover member 28 do not overlap the side surfaces 1b, 1c, and 1d of the first transparent substrate 1 and the side surfaces 2b, 2c, and 2d of the second transparent substrate 2, respectively. Further, in plan view, the side surface 28a of the cover member 28 overlaps the side surface 1a of the first transparent substrate 1, but does not overlap the side surface 2a of the second transparent substrate 2. The cover member 28 includes extending portions Ex2 each located between the side surfaces 28a and 2a, between the side surfaces 28b and 2b, between the side surfaces 28c and 2c, and between the side surfaces 28d and 2d.

Under the extending portions Ex2 of the cover member 28, the sealing material 60 is provided so as to cover the end portions of the first transparent substrate 1 and the second transparent substrate 2, other than the end portion on the mounting portion side (the end portions of the thick transparent layer 20, a detail of which will be described later).

Note that FIG. 9 shows the case where the side surface 28a of the cover member 28 and the side surface 1a of the first transparent substrate 1 overlap each other in plan view, but the configuration is not limited to this. For example, the side surface 28a of the cover member 28 and the side surface 1a of the first transparent substrate 1 do not necessarily have to overlap each other in plan view.

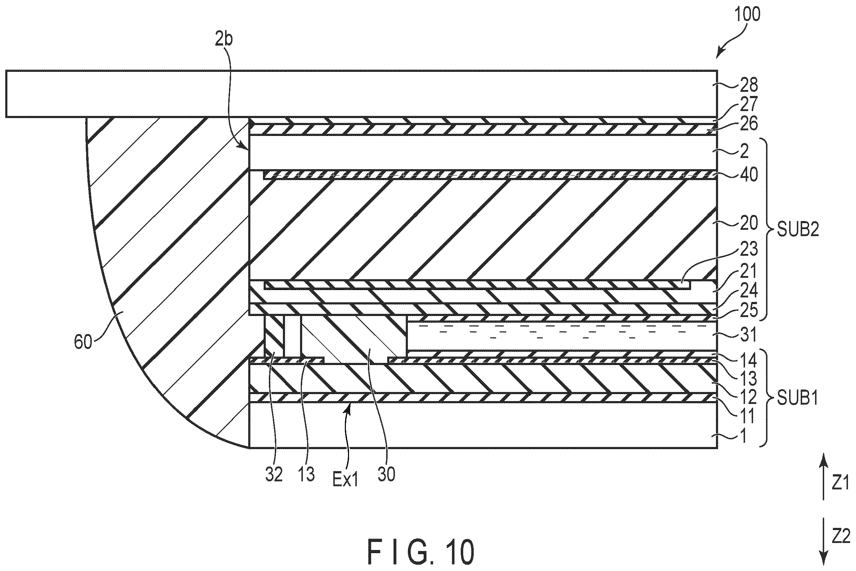

FIG. 10 is a cross-sectional view schematically showing the liquid crystal display device 100 taken along the line G-H in FIG. 9.

As shown in FIG. 10, a polarizer 26 is disposed on a Z1 direction-side surface of the second transparent substrate 2. Further, the cover member 28 is disposed on the Z1 direction side of the polarizer 26 via an adhesive layer 27. The cover member 28 can be made of a glass substrate or a resin substrate, for example.

As described above, under the extending portions Ex2 of the cover member 28, the sealing material 60 is provided to cover the end portion of the first substrate SUB1 and the end portion of the second substrate SUB2, which includes the thick film transparent layer 20.

In the liquid crystal display device 100 of the second modified example as well described above, the configuration of the end portion of the thick film transparent layer 20 still remains unchanged, and is covered by the sealing material 60 provided under the extending portion Ex2. Therefore, as in the case of the configuration shown in FIGS. 4 and 5, it is possible to suppress moisture from entering the thick transparent layer 20 from the end portion of the thick transparent layer 20, and to prevent the parallax barrier pattern 40 from peeling off from the second transparent substrate 2.

### (Third Modified Example)

The third modified example is different from the configuration shown in FIGS. 4 and 5 in that the first transparent substrate 1 does not have an extending portion Ex1 other than the mounting portion. In the following descriptions, the parts that are different from those of the configuration shown in FIGS. 4 and 5 will be explained, and the parts that are similar to those of the configuration shown in FIGS. 4 and 5 will be omitted.

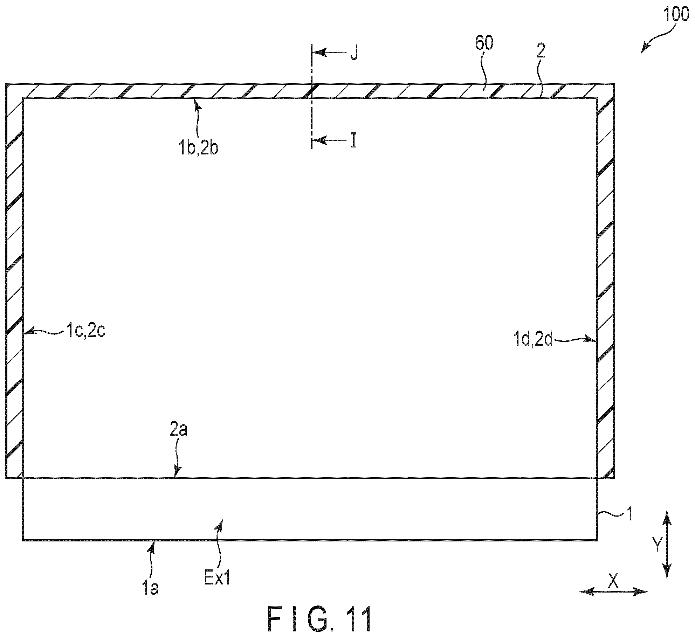

FIG. 11 is a plan view schematically showing a configuration example of the liquid crystal display device 100 according to the third modified example. Note that in FIG. 11, among the elements that make up the liquid crystal display device 100, only the first transparent substrate 1, the second transparent substrate 2, and the sealing material 60 are illustrated.

In plan view, the side surfaces 1b, 1c, and 1d of the first transparent substrate 1 overlap the side surfaces 2b, 2c, and 2d of the second transparent substrate 2, respectively. On the other hand, in plan view, the side surface 1a of the first transparent substrate 1 does not overlap the side surface 2a of the second transparent substrate 2. The first transparent substrate 1 includes an extending portions Ex1 that functions as a mounting portion between the side surface 1a and 2a.

Of the end portions of the first transparent substrate 1 and the second transparent substrate 2 (the end portions of the thick film transparent layer 20, a more detail of which will be described later), the sealing material 60 is provided on the end portions other than the end portion of the mounting portion side.

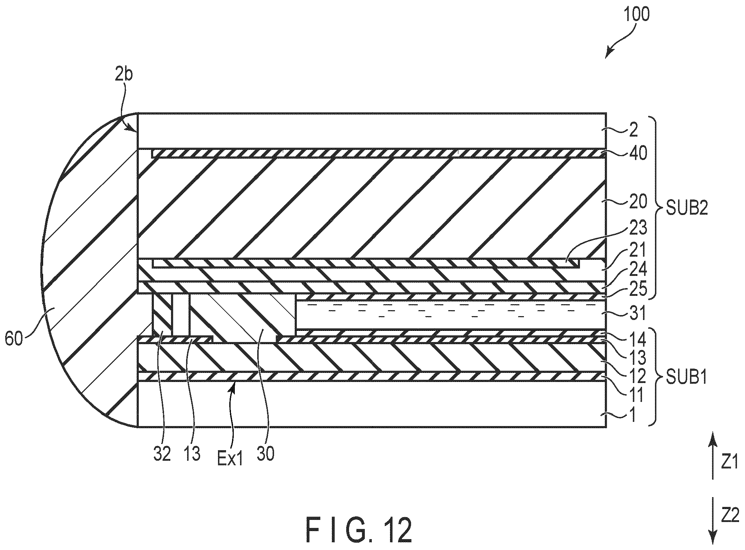

FIG. 12 is a cross-sectional view schematically showing the liquid crystal display device 100 taken along the line I-J in FIG. 11.

As shown in FIG. 12, the sealing material 60 is provided to cover the end portion of the first substrate SUB1 and the end portion of the second substrate SUB2, which includes the thick film transparent layer 20. Note that in this configuration, there is no part supporting the sealing material 60 (specifically, the parts corresponding to the extending portions Ex1 and Ex2 described above), and therefore the sealing material 60 is adhered to the end portion of the first substrate SUB1 and the end portion of the second substrate SUB2, which includes the thick film transparent layer 20, only by its own adhesive strength.

In the liquid crystal display device 100 of the third modified example as well described above, the configuration of the end portion of the thick film transparent layer 20 still remains unchanged, and is covered by the sealing material 60 provided by the sealing material. Therefore, as in the case of the configuration shown in FIGS. 4 and 5, it is possible to suppress moisture from entering the thick transparent layer 20 from the end portion of the thick transparent layer 20, and to prevent the parallax barrier pattern 40 from peeling off from the second transparent substrate 2.

Note that each of the modified examples provided above discusses the case where the sealing material 60 is provided so to cover the end portion of the thick transparent layer 20 other than the end portion on the mounting portion side, but the configuration is not limited to this. For example, the sealing material 60 may as well be provided in a rectangular frame shape so as to cover the entire circumference of the end portions of the second transparent substrate 2.

According to the above-described embodiment, it is possible to provide a liquid crystal display device 100 with high moisture resistance.

## Claims

1. A display device (100) comprising:
a first substrate (SUB1) including a first transparent substrate (1);
a second substrate (SUB2) opposing the first substrate (SUB1) and including a second transparent substrate (2), a parallax barrier pattern (40) formed on a surface on a first substrate (SUB1) side of the second transparent substrate (2), and an organic layer (20) which covers the second transparent substrate (2) and the parallax barrier pattern (40);
a liquid crystal layer (31) sealed between the first substrate (SUB1) and the second substrate (SUB2);
a sealing material (60) which covers an end portion of the organic layer (20), and
a cover member (28) provided on the second transparent substrate (2), wherein
the first transparent substrate (1) extends beyond the second transparent substrate (2) and includes a mounting portion (Ex1) on which a circuit board is mounted,
the sealing material (60) covers an end portion of the organic layer (20), other than an end portion on a mounting portion (Ex1) side of the end portion, and
the cover member (28) includes a second extending portion (Ex2) that extends beyond the second transparent substrate (2) in an entire circumference.

2. The display device (100) of claim 1, wherein
the first transparent substrate (1) includes a first extending portion (Ex1) which extends beyond the second transparent substrate (2) also in an circumferential edge other than the mounting portion (Ex1), and
the sealing material (60) is provided on the first extending portion (Ex1) to cover the end portion of the organic layer (20).

3. The display device (100) of claim 2, wherein
the sealing material (60) is provided between the first extending portion (Ex1) and the second extending portion (Ex2) to cover the end portion of the organic layer (20).

4. The display device (100) of claim 1, 2 and/or 3, wherein
the sealing material (60) is provided under the second extending portion (Ex2) to cover the end portion of the organic layer (20).

5. The display device (100) of at least one of claims 1 to 4, wherein
the sealing material (60) is provided to further cover an end portion of the organic layer (20), which is located on a side of the mounting portion (Ex1).

## Patentansprüche

1. Anzeigevorrichtung (100), die Folgendes umfasst:
ein erstes Substrat (SUB1), das ein erstes durchsichtiges Substrat (1) enthält;
ein zweites Substrat (SUB2), das dem ersten Substrat (SUB1) gegenüberliegt und ein zweites durchsichtiges Substrat (2), eine Parallaxensperrstruktur (40), die auf einer Fläche auf einer Seite des ersten Substrats (SUB1) des zweiten durchsichtigen Substrats (2) gebildet ist, und eine organische Schicht (120), die das zweite durchsichtige Substrat (2) und die Parallaxensperrstruktur (40) bedeckt, aufweist;
eine Flüssigkristallschicht (31), die zwischen dem ersten Substrat (SUB1) und dem zweiten Substrat (SUB2) dicht eingeschlossen ist;
ein Dichtungsmaterial (50), das einen Endabschnitt der organischen Schicht (20) bedeckt, und
ein Abdeckelement (28), das auf dem zweiten durchsichtigen Substrat (2) bereitgestellt ist, wobei
das erste durchsichtige Substrat (1) sich über das zweite durchsichtige Substrat (2) hinaus erstreckt und einen Montageabschnitt (Ex1) aufweist, auf dem eine Leiterplatte angebracht ist,
das Dichtungsmaterial (60) einen anderen Endabschnitt der organischen Schicht (20) als einen Endabschnitt auf einer Seite des Montageabschnitts (Ex1) des Endabschnitts bedeckt und
das Abdeckelement (28) einen zweiten Erweiterungsabschnitt (Ex2) enthält, der sich in einem gesamten Umfang über das zweite durchsichtige Substrat (2) hinaus erstreckt.

2. Anzeigevorrichtung (100) nach Anspruch 1, wobei das erste durchsichtige Substrat (1) einen anderen ersten Erweiterungsabschnitt (Ex1) als den Montageabschnitt (Ex1) enthält, der sich ebenfalls in einem Umfangsrand über das zweite durchsichtige Substrat (2) hinaus erstreckt, und
das Dichtungsmaterial (60) auf dem ersten Erweiterungsabschnitt (Ex1) bereitgestellt ist, derart, dass es den Endabschnitt der organischen Schicht (20) bedeckt.

3. Anzeigevorrichtung (100) nach Anspruch 2, wobei das Dichtungsmaterial (60) zwischen dem ersten Erweiterungsabschnitt (Ex1) und dem zweiten Erweiterungsabschnitt (Ex2) bereitgestellt ist, derart, dass es den Endabschnitt der organischen Schicht (20) bedeckt.

4. Anzeigevorrichtung (100) nach Anspruch 1, 2 und/oder 3, wobei das Dichtungsmaterial (60) unter dem zweiten Erweiterungsabschnitt (Ex2) bereitgestellt ist, derart, dass es den Endabschnitt der organischen Schicht (20) bedeckt.

5. Anzeigevorrichtung (100) nach mindestens einem der Ansprüche 1 bis 4, wobei das Dichtungsmaterial (60) so bereitgestellt ist, dass es ferner einen Endabschnitt der organischen Schicht (20) bedeckt, der auf einer Seite des Montageabschnitts (Ex1) angeordnet ist.

## Revendications

1. Dispositif d'affichage (100) comprenant :
un premier substrat (SUB1) incluant un premier substrat transparent (1) ;
un deuxième substrat (SUB2) en opposition au premier substrat (SUB1) et incluant un deuxième substrat transparent (2), un motif de barrière de parallaxe (40) formé sur une surface sur un côté du premier substrat (SUB1) du deuxième substrat transparent (2), et une couche organique (20) qui couvre le deuxième substrat transparent (2) et le motif de barrière de parallaxe (40) ;
une couche à cristaux liquides (31) scellée entre le premier substrat (SUB1) et le deuxième substrat (SUB2) ;
un matériau de scellement (60) qui couvre une portion d'extrémité de la couche organique (20), et
un élément de couverture (28) prévu sur le deuxième substrat transparent (2), dans lequel
le premier substrat transparent (1) s'étend au-delà du deuxième substrat transparent (2) et inclut une portion de montage (Ex1) sur laquelle est montée une carte à circuit imprimé,
le matériau de scellement (60) couvre une portion d'extrémité de la couche organique (20), autre que celle d'une portion d'extrémité sur un côté de la portion de montage (Ex1) de la portion d'extrémité, et
l'élément de couverture (28) inclut une deuxième portion de prolongement (Ex2) qui s'étend au-delà du deuxième substrat transparent (2) dans une circonférence entière.

2. Dispositif d'affichage (100) selon la revendication 1, dans lequel
le premier substrat transparent (1) inclut une première portion de prolongement (Ex1) qui s'étend au-delà du deuxième substrat transparent (2) également dans un bord circonférentiel autre que la portion de montage (Ex1), et
le matériau de scellement (60) est prévu sur la première portion de prolongement (Ex1) pour couvrir la portion d'extrémité de la couche organique (20).

3. Dispositif d'affichage (100) selon la revendication 2, dans lequel
le matériau de scellement (60) est prévu entre la première portion de prolongement (Ex1) et la deuxième portion de prolongement (Ex2) pour couvrir la portion d'extrémité de la couche organique (20).

4. Dispositif d'affichage (100) selon la revendication 1, 2 et/ou 3, dans lequel
le matériau de scellement (60) est prévu sous la deuxième portion de prolongement (Ex2) pour couvrir la portion d'extrémité de la couche organique (20).

5. Dispositif d'affichage (100) selon l'une au moins des revendications 1 à 4, dans lequel
le matériau de scellement (60) est prévu pour couvrir en outre une portion d'extrémité de la couche organique (20), qui est située sur un côté de la portion de montage (Ex1).
